# EUROPÄISCHE PATENTSCHRIFT

(11) **EP 1 169 581 B1**
(45) Veröffentlichungstag und Bekanntmachung des Hinweises auf die Patenterteilung: **24.09.2003**
(21) Anmeldenummer: 00925210.7
(22) Anmeldetag: 13.04.2000
(51) Int. Cl.: F16D 65/21, F16D 55/224, B60T 13/74

(54) **TEILBELAGSCHEIBENBREMSE MIT ELEKTROMECHANISCHER BETÄTIGUNGSEINHEIT**
PARTIALLY LINED DISK BRAKE WITH ELECTROMECHANICAL ACTUATOR UNIT
FREIN A DISQUE A GARNITURE PARTIELLE COMPORTANT UNE UNITE D'ACTIONNEMENT ELECTROMECANIQUE

(30) Priorität: 13.04.1999 DE 19916737
(43) Veröffentlichungstag der Anmeldung: 09.01.2002
(73) Patentinhaber: Continental Teves AG & Co. oHG, 60488 Frankfurt (DE)
(72) Erfinder: WEILER, Rolf, D-65817 Eppstein (DE); BALZ, Jürgen, D-65510 Hünstetten-Oberlibbach (DE); DENHARD, Werner, D-36396 Steinau (DE); HEIDERICH, Stephan, D-64572 Büttelborn (DE)
(86) Internationale Anmeldenummer: EP0003342
(87) Internationale Veröffentlichungsnummer: WO00061962

(56) Entgegenhaltungen:
- WO-A-96/03301
- DE-A- 4 312 524
- DE-A- 19 645 825
- FR-A- 2 757 918
- US-A- 4 836 338

## Beschreibung

Die vorliegende Erfindung betrifft eine elektromechanisch betätigbare Teilbelagscheibenbremse für Kraftfahrzeuge mit einem Bremssattel, mit einer elektromechanischen Betätigungseinheit, mit mindestens zwei jeweils mit einer Reibfläche einer Bremsscheibe zusammenwirkenden, im Bremssattel verschiebbar angeordneten Bremsbelägen, von denen einer mittels zumindest eines Betätigungselementes durch die Betätigungseinheit direkt und der andere Bremsbelag durch die Wirkung einer vom Bremssattel aufgebrachten Reaktionskraft indirekt mit der Bremsscheibe in Eingriff bringbar ist, und mit einem wirkungsmäßig zwischen der Betätigungseinheit und dem Betätigungselement angeordneten mehrstufigen Untersetzungsgetriebe, welches selbsthemmungsfrei ausgebildet ist, d.h. einen Gesamtwirkungsgrad η > 50% aufweist und einen schaltbaren Freilauf sowie ein Wälzkörperrampengetriebe umfasst, wobei die Betätigungseinheit, das Untersetzungsgetriebe und das Betätigungselement in einer gehäuseartigen Ausnehmung des Bremssattels angeordnet sind.

Eine derartige elektromechanisch betätigbare Scheibenbremse ist aus der FR 27 57 918 bekannt. Die dort beschriebene Scheibenbremse besitzt einen Schwimmsattel sowie eine am Bremssattel angeordnete Betätigungseinheit. Die Betätigungseinheit weist einen Elektromotor auf, der unter Zwischenschaltung eines Untersetzungsgetriebes ein Betätigungselement verstellt, mittels dessen einer von zwei im Bremssattel verschiebbar angeordneten Bremsbelägen direkt mit einer Bremsscheibe in Eingriff gebracht wird. Der zweite Bremsbelag wird aufgrund einer auf den Bremssattel einwirkenden Reaktionskraft ebenfalls an die Bremsscheibe gepreßt. Trotz seiner kompakten Bauform weist diese Scheibenbremse Schwächen hinsichtlich ihrer erreichbaren Bremsleistungen und der Umsetzung sowohl einer Betriebs- als auch einer Feststellbremsfunktion auf.

Aus der DE 197 32 168 C1 ist eine hydraulische Fahrzeugbremse mit Feststelleinrichtung bekannt, bei ein Bremskolben innerhalb einer Hydraulikkammer der Fahrzeugbremse verschiebbar aufgenommen ist. Der Bremskolben kann mittels Hydraulikdruck innerhalb des Bremssattels in eine Betätigungsstellung verschoben werden, in der er mit einem Bremsbelag derart zusammenwirkt, daß der Bremskolben den Bremsbelag gegen eine Bremsscheibe preßt. Damit die Fahrzeugbremse neben ihrer Funktion als hydraulische Betriebsbremse auch als Feststellbremse verwendet werden kann, ist eine koaxial zur Bremskolbenachse angeordnete Spindel/Mutter-Anordnung vorhanden, die elektromotorisch angetrieben wird. Dazu ist neben einem Elektromotor noch ein aufwendiges Untersetzungsgetriebe erforderlich, um die notwendigen Zuspannkräfte im Falle einer Feststellbremsung aufbringen zu können. Die genannte Fahrzeugbremse benötigt also zwei voneinander unabhängige Betätigungswege, nämlich einen hydraulischen und elektromechanischen. Dies bedingt nicht nur einen sehr aufwendigen Gesamtaufbau der Fahrzeugbremse sondern auch ein unerwünscht kompliziertes Verfahren zum Betreiben bzw. Steuern der Fahrzeugbremse.

Ausgehend davon besteht die Aufgabe der Erfindung darin, eine einfach aufgebaute, elektromechanisch betätigbare Teilbelagscheibenbremse anzugeben, die sowohl als Betriebs- als auch als Feststellbremse verwendbar ist und ökonomisch sowie komfortabel zu betreiben ist.

Diese Aufgabe wird durch die im kennzeichnenden Teil des Patentanspruchs 1 genannten Merkmale gelöst. Durch die Wirkung der genannten Merkmale erfolgt die Übertragung der Zuspannkraft, ausgehend von der elektromechanischen Betätigungseinheit, zu den Bremsbelägen möglichst verlustfrei und demzufolge sehr effizient. In Zuspanndrehrichtung der Betätigungseinheit bzw. des selbsthemmungsfreien Untersetzungsgetriebes wird das Übertragen der Bremsenzuspannkraft von der Betätigungseinheit zu den Bremsbelägen nicht beeinflusst. Die Rampenanordnungen ermöglichen einen großen nutzbaren Verdrehwinkel. Der translatorische Hub der gewählten Getriebeausführung ist auf den jeweiligen Betätigungshub des Bremskolbens abgestimmt, bzw. ist mit ihm identisch.

Bei einer besonders vorteilhaften Ausführung umfasst das Wälzkörperrampengetriebe bevorzugt zwei relativ zueinander verdrehbare Rampenhälften, von denen eine erste Rampenhälfte an ein abtriebsseitiges Ende der elektromechanischen Betätigungseinheit gekoppelt ist und eine zweite Rampenhälfte mit dem Betätigungselement wirkungsverbunden ist. Im Betrieb der Teilbelagscheibenbremse können die beiden Rampenhälften gegeneinander verdreht werden, um den Betätigungshub zu erzeugen und über das Betätigungselement auf zumindest einen der Bremsbeläge zu übertragen. Vorzugsweise ist dabei die zweite, mit dem Betätigungselement wirkungsverbundene Rampenhälfte verdrehgesichert jedoch zumindest um das Maß des Betätigungshubes des Bremsbelages verschiebbar im Gehäuse des Bremssattels angeordnet.

Gemäß einer bevorzugten Ausführung der Erfindung ist der schaltbare Freilauf als eine entgegen der Zuspanndrehrichtung des Untersetzungsgetriebes wirksame Rücklaufsperre ausgebildet. Diese Rücklaufsperre ist beim Zuspannen der Bremse für die Funktion des Untersetzungsgetriebes ohne Wirkung. Lediglich im zugespannten Zustand und bei gesperrtem Freilauf wird ein Zurückdrehen des selbsthemmungsfreien Untersetzungsgetriebes verhindert. Die Bremse kann damit im zugespannten Zustand verriegelt und somit gegen ein Lösen der Bremse infolge nachlassender Zupannkraft der Bremse gesichert werden. Zum Lösen der Bremse kann die Sperrfunktion des Freilaufes mittels einer Schaltfunktion bei Drehung des Untersetzungsgetriebes in Lösedrehrichtung wieder aufgehoben werden.

Gemäß einer vorteilhaften Ausführung der Erfindung umfaßt das mehrstufige Untersetzungsgetriebe eine antriebsseitig an die elektromechanische Betätigungseinheit gekoppelte Planetengetriebestufe sowie eine sich daran anschließende Stirnradgetriebestufe, die abtriebsseitig mit dem Wälzkörperrampengetrieb zusammenwirkt. Durch die Planetengetriebestufe in Verbindung mit der Stirnradgetriebestufe wird für das gesamte Untersetzungsgetriebe ein besonders hohes Untersetzungsverhältnis unter Beanspruchung eines nur sehr geringen Bauraumes erreicht.

Eine besonders wirkungsvolle und einfach umsetzbare Ausführung der Teilbelagscheibenbremse wird erfindungsgemäß dadurch erreicht, daß das Betätigungselement einen verschiebbar im Bremssattel angeordneten sowie mit mindestens einem Bremsbelag wirkungsverbundenen Bremskolben aufweist, der an das Wälzkörperrampengetriebe abtriebsseitig gekoppelt ist. Dabei kann hinsichtlich der Gesamtkonstruktion des Bremssattels auf bekannte Konstruktionsmerkmale eines Bremssattels mit hydraulischer Betätigungsvorrichtung zurückgegriffen werden.

Um den translatorischen Hub des Untersetzungsgetriebes im Betrieb der Teilbelagscheibenbremse konstant zu halten, umfaßt das Betätigungselement vorzugsweise außerdem eine verschiebbar im Bremssattel angeordnete, in Zuspannrichtung der Teilbelagscheibenbremse verlängerbare Nachstellvorrichtung, die einerseits mit mindestens einem Bremsbelag wirkungsverbundenen ist und andererseits an die Abtriebsseite des Wälzkörperrampengetriebes gekoppelt ist. Die verlängerbare Nachstellvorrichtung trägt dem Bremsbelagverschleiß Rechnung und verlängert sich in dem Maße in dem der Bremsbelagverschleiß fortschreitet. Der jeweilige Betätigungshub für den Bremskolben bzw. der Hub der in Zuspannrichtung verschiebbar im Bremssattelgehäuse aufgenommenen Rampenhälfte des Wälzkörperrampengetriebes bleibt über die gesamte Lebensdauer der Bremse erhalten. Vorteilhafterweise umfaßt die Nachstellvorrichtung eine Mutter-Spindel-Anordnung, die einerseits mit dem Bremskolben und andererseits mit dem Wälzkörperrampengetriebe zusammenwirkt. Mutter und Spindel sind über ein Gewinde zueinander verdrehbar angeordnet, wobei die Spindel verdrehsicher mit der im Bremssattelgehäuse verschiebbar angeordneten, zweiten Rampenhälfte verbunden ist.

Gemäß einer weiteren vorteilhaften Ausführung der Erfindung weist die Teilbelagscheibenbremse eine von der elektromechanischen Betätigungseinheit unabhängige hydraulische Betätigungsvorrichtung aufweist. Diese hydraulische Betätigungsvorrichtung wird insbesondere von einer Zylinderbohrung im Bremssattel in Verbindung mit dem Bremskolben gebildet. Innerhalb einer solchen Anordnung kann die hydraulische Betätigungsvorrichtung für Betriebsbremsungen und die elektromechanische Betätigungseinheit für Feststellbremsungen genutzt werden. Die beiden unterschiedlichen Betätigungswege können damit zielgerichtet auf ihrer jeweilige Funktion hin zielgerichtet konstruiert und ausgelegt werden.

Eine besonders kostengünstige, erfindungsgemäße Teilbelagscheibenbremse wird dadurch erreicht, daß die elektromechanische Betätigungseinheit von einem DC- bzw. Gleichstrom-Elektromotor gebildet wird. Derartige Elektromotoren sind in vielfältigen Ausführungen bekannt und können als standardisiertes Bauteil innerhalb der Bremse Verwendung finden.

In einer bevorzugten Ausführungsform der Teilbelagscheibenbremse weist der Elektromotor einen Winkellagesensor auf, der an die Drehbewegung des Elektromotors gekoppelt ist insbesondere in das Untersetzungsgetriebe bzw. den Elektromotor integriert sein kann. Die aktuelle Motorstellung sowie Motorbewegung mit Drehsinn und Drehgeschwindigkeit wird somit jederzeit erfaßt und erlaubt damit einen Rückschluß auf den zugehörigen Betätigungszustand der Teilbelagscheibenbremse.

Gemäß einer Weiterbildung der Erfindung besitzt das Untersetzungsgetriebe eine Werkzeugaufnahme zum Ansetzen eines Notbetätigungselementes. Dadurch wird im Fehlerfall eine Notbetätigung der Bremse, d. h. Lösen oder Zuspannen, gestattet, wenn beispielsweise keine ausreichende elektrische Versorgungsenergie zur Verfügung steht.

Eine vorteilhafte Ausführung der Erfindung ergibt sich dadurch, daß zumindest die elektromechanische Betätigungseinheit, das Planetengetriebe sowie ein Antriebsrad des Stirnradgetriebes eine erste selbstständig handhabbare Unterbaugruppe bilden, die in der gehäuseartigen Ausnehmung des Bremssattels angeordnet und befestigt ist. Darüber hinaus kann diese erste Unterbaugruppe um weitere sinnvolle Einzelbauteile ergänzt werden. Dieses Modul läßt sich somit einfach außerhalb des Bremssattels vormontieren und nach dem Einsetzen in die Bremssattelausnehmung beispielsweise durch Verschrauben befestigen. Gleichermaßen ist es sinnvoll, daß zumindest das Wälzkörperrampengetriebe, der schaltbare Freilauf sowie ein Abtriebsrad des Stirnradgetriebes eine weitere selbstständig handhabbare Unterbaugruppe bilden. Auch diese zweite Unterbaugruppe läßt sich gut vormontieren und schließlich in der gehäuseartigen Ausnehmung des Bremssattels befestigen. Durch diese Unterbaugruppen ergibt sich eine durchaus erwünschte, insbesondere montagefreundliche Modulbauweise für die Teilbelagscheibenbremse.

Gemäß einer bevorzugten Ausführung der Erfindung sind die elektromechanische Betätigungseinheit, das Betätigungselement sowie das mehrstufige Untersetzungsgetriebe innerhalb des Bremssattels angeordnet sowie befestigt und mittels eines Gehäusedeckels gegenüber der Umgebung abgedichtet. Dadurch ergibt sich einerseits eine besonders kompakte Bauform für den Bremssattel und andererseits eine montagefreundliche Erreichbarkeit der einzelnen Baugruppen der Teilbelagscheibenbremse durch einfaches Entfernen des Gehäusedeckels. Der Gehäusedekkel vermeidet eine Verunreinigung der einzelnen Unterbaugruppen und gewährleistet somit den funktionssicheren Betrieb der Bremse.

Weitere erfindungsgemäße Ausführungsbeispiele sind im folgenden den Figuren sowie den zugehörigen Beschreibungsabschnitten zu entnehmen.

Es zeigt:
- Fig. 1: eine erfindungsgemäße Ausführungsform eines kombinierten Bremssattels einer Teilbelagscheibenbremse für Betriebs- und Feststellbremsfunktion in teilweise geschnittener Ansicht;
- Fig. 2: eine entlang der Linie X - X geschnittene Ansicht des Bremssattels aus Fig. 1;
- Fig. 3: eine entlang der Linie Y - Y in Fig. 2 geschnittene Ansicht des Bremssattels;
- Fig. 4: eine entlang der Linie W - W in Fig. 2 geschnittene Ansicht des Bremssattels;
- Fig. 5: eine Ausführung eines Wälzköperrampengetriebes mit einem Freilauf in mehreren teilweise geschnittenen Ansichten;
- Fig. 6: eine Ausführung einer Rampenhälfte des Wälzkörperrampengetriebes in mehreren teilweise geschnittenen Ansichten.

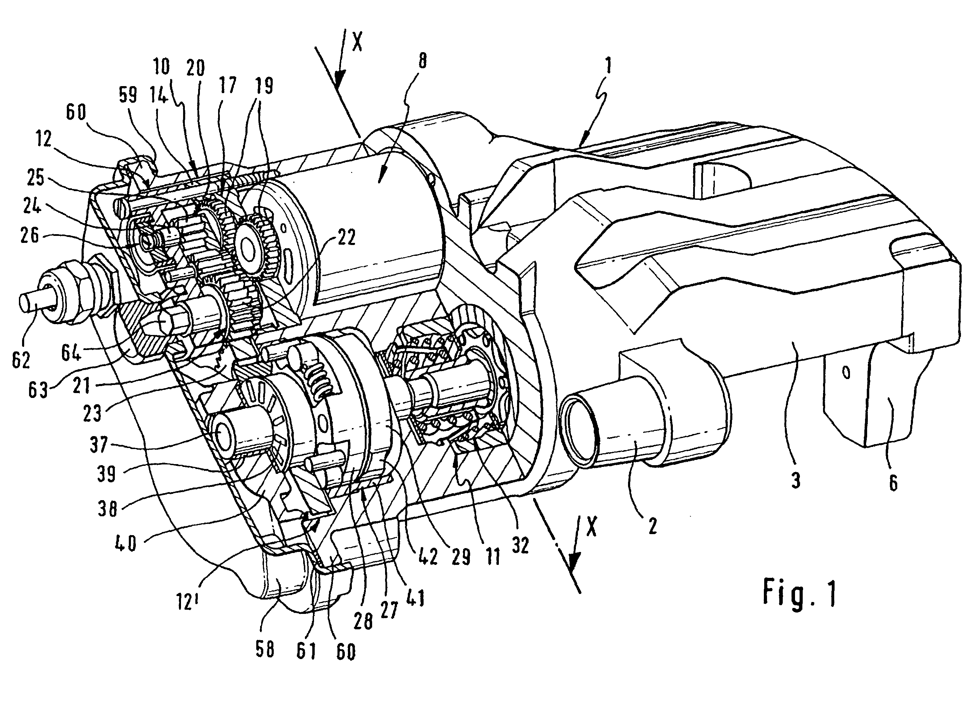

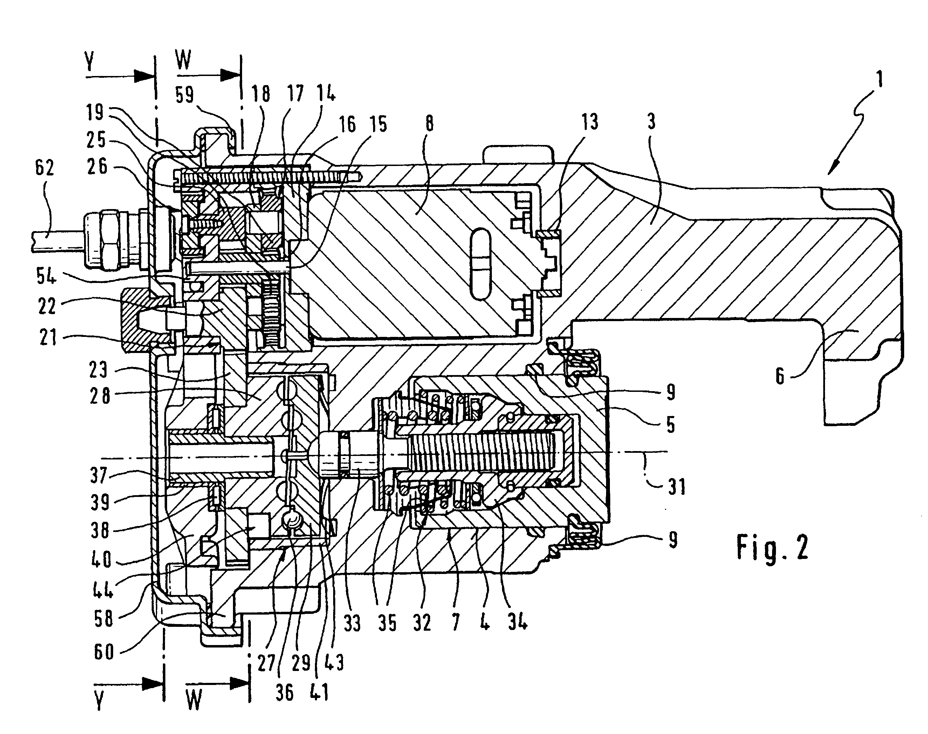

Der in den Figuren 1-4 wiedergegebene kombinierte Bremssattel 1 einer Teilbelagscheibenbremse ist zur Umsetzung der Betriebs- wie auch der Feststellbremsfunktion geeignet. Er ist als Schwimmsattel ausgebildet, d. h. über eine Führungshülse 2 einer nicht gezeigten Bolzenführung an einem fahrzeugfesten Bremshalter bezogen auf die Zuspannrichtung der Teilbelagscheibenbremse verschiebbar gelagert. Der Bremssattel 1 übergreift mit einem Brückenabschnitt 3 eine nicht gezeigte Bremsscheibe ebenso wie beiderseits der Bremsscheibe angeordnete Bremsbeläge, die mit der Bremsscheibe in bekannter Art und Weise tribologisch zusammenwirken. Hierbei ist einer der Bremsbeläge an einen verschiebbar in einer Zylinderbohrung 4 aufgenommenen Bremskolben 5 gekoppelt. Der andere Bremsbelag steht mit einem bezogen auf die Fahrzeugachse axial außenliegenden Sattelschenkel 6 in Verbindung. Die eigentliche Zuspannkraft der Schwimmsattel-Teilbelagscheibenbremse wird in bekannter Weise über den Bremskolben 5 als Betätigungselement auf den innenliegenden Bremsbelag übertragen. Infolge der Reaktionskraft und der daraus resultierenden Bremssattelverschiebung wird dann auch der außenliegende Bremsbelag gegen die Bremsscheibe gepreßt.

Um die erforderliche Zuspannkraft aufzubringen sind im Bremssattel 1 einerseits eine hydraulische Betätigungsvorrichtung 7 und andererseits eine elektromechanische Betätigungseinheit 8 vorgesehen. Die hydraulische Betätigungsvorrichtung 7 umfaßt im wesentlichen die Zylinderbohrung 4 sowie den Bremskolben 5 und ist üblicherweise für die Betriebsbremsfunktion vorgesehen. Dabei ist der von der Zylinderbohrung 4 und dem Innern des Bremskolbens 5 gebildete hydraulische Druckraum mittels Dichtelementen 9 gegenüber der Umgebung abgedichtet.

Die elektromechanische Betätigungseinheit 8 ist im wesentlichen für die Umsetzung der Feststellbremsfunktion verantwortlich und wirkt über ein zwischengeschaltetes mehrstufiges Untersetzunggetriebe 10 sowie ein Betätigungselement 11 auf den innenliegenden Bremsbelag ein. Die elektromechanische Betätigungseinheit 8 ist dabei zusammen mit dem Untersetzunggetriebe 10 und dem Betätigungselement 11 in den Bremssattel 1 integriert und in einer gehäuseartigen Ausnehmung 12, 12' des Bremssattels angeordnet. Die elektromechanische Betätigungseinheit 8 ist vorzugsweise als Elektromotor ausgeführt. Dabei handelt es sich insbesondere um einen Gleichstrommotor (bzw. DC-Motor), der beispielsweise in Form einer standardisierten Motorausführung Verwendung finden kann. Innerhalb des Bremssattels 1 ist der Elektromotor 8 beidseitig über eine Lagerhülse 13 sowie einen Lagerschild 14 aufgenommen.

An seiner Abtriebsseite besitzt der Elektromotor 8 eine Betätigungswelle 15 an der ein Sonnenrad 16 befestigt ist. Das Sonnenrad 16 ist Bestandteil eines an die Betätigungseinheit 8 gekoppelten Planetengetriebes 17, das eine hohe Untersetzung der eingeleiteten Motordrehzahl bei gleichzeitiger Drehmomentsteigerung liefert. Das Planetengetriebe 17 umfaßt einen Planetenträger 18 mit Planetenrädern 19, die in ein Hohlrad 20 eingreifen. Dabei ist das Hohlrad 20 entweder bremssattelfest angeformt oder aber wie in den Figuren 1-4 angedeutet in einen Lagerschild 14 integriert, der mit dem Bremssattel 1 verschraubt ist. An der Abtriebsseite ist das Planetengetriebe 17 an ein Stirnradgetriebe 21 angebunden, das ein Antriebs- 22 und ein Abtriebsrad 23 umfaßt. Gleichzeitig wird die abtriebsseitige Drehzahl des Planetengetriebes 17 über eine Sensorwelle 24 mit Zahnrad 25 an einen Winkellagesensor 26 übertragen. Der Winkellagesensor 26 ist damit an den Elektromotor 8 gekoppelt und gestattet dadurch jederzeit die aktuelle Bestimmung der Winkellage bzw. Drehbewegung des Elektromotors 8 bezüglich Drehrichtung und Drehgeschwindigkeit. Dies läßt letztlich einen Rückschluß auf den aktuellen Betätigungszustand der Bremse zu. Der Winkellagesensor 26 kann besonders einfach mittels eines Hallsensors umgesetzt werden. Dafür ist allgemein eine Kopplung an die Drehbewegung des Elektromotors 8 erforderlich, so daß der Winkellagesensor 26 direkt am Elektromotor 8 oder an einer geeigneten Stelle des Untersetzungsgetriebes 10 angeordnet sein kann. Dabei bietet sich aufgrund der hohen Drehzahlen und somit der hohen Auflösung eine Anordnung des Winkellagesensors 26 möglichst nah am Elektromotor 8 an.

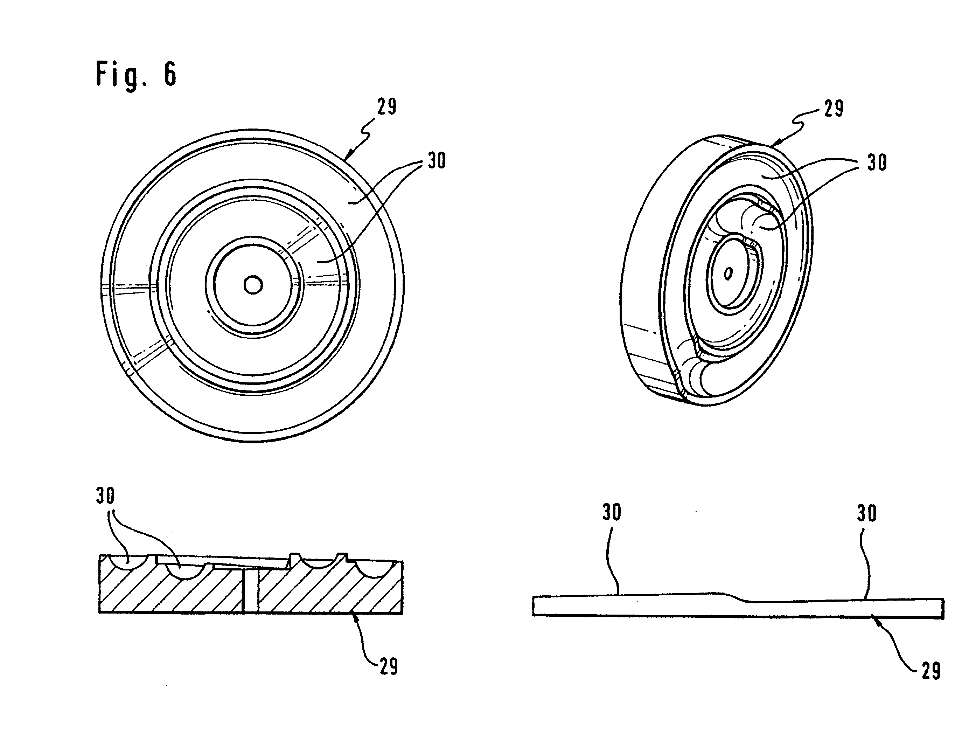

Die an das Planetengetriebe 17 sich abtriebsseitig anschlieβende Stirnradgetriebestufe 21 bewirkt eine weitere Drehzahluntersetzung sowie Drehmomentsteigerung und dient zum Antrieb eines koaxial zum Bremskolben 5 angeordneten Wälzkörperrampengetriebes 27. Das Wälzköperrampengetriebe 27 umfaßt insbesondere mehrere hoch untersetzende Rampenanordnungen, die an zwei zueinander verdrehbaren Rampenhälften 28, 29 in Gestalt von Rampenbahnen 30 angeformt sind. Die Rampenbahnen 30 sind in ihrer Ausführung genauer in Figur 6 am Beispiel der zweiten Rampenhälfte 29 erkennbar. Es handelt sich vorzugsweise um zwei konzentrisch ineinandergeschachtelte Rampenbahnen 30, die zusätzlich in ihrer Winkellage um 180° versetzt sind. Beide Rampenbahnen weisen den gleichen Steigungssinn auf. Innerhalb der Rampenbahnen 30 sind Wälzkörper 36, insbesondere Kugeln oder Rollen, angeordnet, die in den Rampenbahnen 30 abrollen können. Zur Vergrößerung des abtriebsseitigen Getriebehubes ist es vorteilhaft die Rampenbahnen 30 einander entsprechend an beiden Rampenhälften 28, 29 vorzusehen. Die verschachtelte Anordnung der Rampenbahnen 30 erlaubt in Kombination mit dem Winkelversatz der Rampenbahnen 30 gegenüber bekannten Rampenanordnungen eine zusätzliche Steigerung des Untersetzungsverhältnisses des Wälzkörperrampengetriebes 27. Dies wird durch den gegenüber bekannten Rampenanordnungen erheblich vergrößerten Verdrehwinkel der beiden Rampenhälften 28, 29 erreicht, der infolge der Anordnung der Rampenbahnen 30 möglich wird. Somit können nutzbare Verdrehwinkel bis etwa 270° realisiert werden.

Die erste Rampenhälfte 28 ist mit dem Abtriebsrad 23 des Stirnradgetriebes 21 drehfest verbunden und über eine Hohlwelle 37 mit Lager 38 im Bremssattel 1 gelagert. Dazu ist die Hohlwelle 37 mit Lagerhülse 39 in einer Traverse 40 drehbar aufgenommen, wobei die Traverse 40 hochfest, insbesondere aus Stahl ausgebldet ist und mit dem Bremssattel 1 fest verschraubt ist. Die zweite Rampenhälfte 29 ist demgegenüber verdrehgesichert, jedoch in Richtung der Bremskolbenachse 31 verschiebbar in der Ausnehmung 12' des Bremssattels 1 aufgenommen. Hierbei ist eine Hülse 41 verdrehsicher im Bremssattel 1 befestigt, vorzugsweise durch Einpressen und die zweite Rampenhälfte 29 ist wiederum an der Hülse 41 drehfest angeordnet. Dazu besitzt die zweite Rampenhälfte 29 an ihrer Mantelfläche vorzugsweise Ausnehmungen 42 die mit zugehörigen Sicken der Hülse 41 zusammenwirken. Eine entsprechende Verdrehsicherung mit Ausnehmungen und zugehörigen Sicken kann auch zwischen Hülse 41 und Bremssattel 1 angewendet werden. Vorzugsweise ist die Hülse 41 an einem Ende mit einer außenliegenden Rändelung 48 versehen und mit diesem Ende in den Bremssattel 1 drehfest eingepreßt. Die genaue Ausführung der Verdrehsicherung ist jedoch letztlich nicht entscheidend für die Erfindung. Analog wirkende Verdrehsicherungen, die die zweite Rampenhälfte 29 drehfest im Bremssattel 1 fixieren sind ebenfalls möglich. Die beiden Rampenhälften 28, 29 werden durch die Wirkung eine Feder 43 aneinandergepreßt, wodurch die Wälzkörper 36 stets in ihrer korrekten Position innerhalb der Rampenbahnen gehalten werden.

Im einzelnen bewirkt das Wälzkörperrampengetriebe 27 durch Verdrehung der beiden Rampenhälften 28, 29 gegeneinander ein Abrollen der Wälzkörper 36 in den Rampenbahnen 30. Dies bedeutet einerseits eine sehr hohe Drehzahluntersetzung und andererseits in Form eines 'Rot-Trans-Getriebes' eine Umsetzung der rotatorischen Eingangsgröße (abtriebsseitige Drehzahl des Stirnradgetriebes 21) in eine translatorische Ausgangsgröße (Getriebehub). Als translatorische Ausgangsgröße wird ein Getriebehub in Richtung der Bremskolbenachse 31 erzeugt. Dieser Getriebehub wird bei elektromechanischer Zuspannung des Bremssattels 1 mittels der Betätigungseinheit 8 über eine mechanische Nachstellvorrichtung 32, die als Betätigungselement wirkt, auf den Bremskolben 5 übertragen. Dabei entspricht der Getriebehub im wesentlichen dem Zuspannhub des Bremskolbens.

Die Nachstellvorrichtung 32 berücksichtigt den Belagverschleiß an den Bremsbelägen und gleicht diesen durch Verlängerung in Richtung der Bremskolbenachse 5 aus. Dadurch kann der notwendige Zuspannhub des Bremskolbens 5 und somit der Getriebehub des Wälzkörperrampengetriebes 27 konstant gehalten werden. Die Nachstellvorrichtung 32 steht einerseits verdrehfest mit dem Wälzkörperrampengetriebe 27 und andererseits mit dem Bremskolben 5 in Verbindung. Sie ist in Richtung der Bremskolbenachse 5 verlängerbar und beinhaltet im wesentlichen eine Mutter-Spindel-Anordnung mit einer verdrehfest an der zweiten Rampenhälfte 29 anliegenden Spindel 33 und einer drehbar auf der Spindel 33 angeordneten Mutter 34, die sich am Bremskolben 5 abstützt. Mutter 34 und Spindel 33 sind mittels mehrerer Federn 35 gegeneinander verspannt, so daß bei Bremsbelagverschleiß eine Verlängerung der Nachstellvorrichtung 32 in Richtung der Bremskolbenachse 31 bewirkt wird. Der grundsätzliche Aufbau einer solchen Nachstellvorrichtung 32 ebenso wie ihre Funktion sind bereits bekannt und sollen hier nicht näher erläutert werden. Bezüglich näherer Einzelheiten der Nachstellvorrichtung 32 hinsichtlich Konstruktion und Funktion wird auf den Inhalt der DE 195 21 634 A1 verwiesen. Die dort genannten Merkmale der Nachstellvorrichtung sind auf die erfindungsgemäße Nachstellvorrichtung übertragbar.

Grundsätzlich ist das gesamte, mehrstufige Untersetzungsgetriebe 10 mit Planetengetriebe 17, Stirnradgetriebe 21 und Wälzkörperrampengetriebe 27 auf einen hohen Gesamtwirkungsgrad ausgelegt. Daraus ergibt sich für das Untersetzungsgetriebe 10 ein Gesamtwirkungsgrad η > 50%, d. h. das Untersetzungsgetriebe 10 ist selbsthemmungsfrei.

Zur Umsetzung einer Feststellbremsfunktion bei elektromotorischer Zuspannung der Bremse mittels der Betätigungseinheit 8 ist es somit erforderlich den Bremssattel 1 im zugespannten Zustand zu verriegeln. Dies wird über einen mit dem Wälzkörperrampengetriebe 27 zusammenwirkenden, schaltbaren Freilauf 44 realisiert. Der schaltbare Freilauf 44 ist zwischen dem Abtriebsrad 23 des Stirnradgetriebes 21 und der ersten Rampenhälfte 28 angeordnet. Er funktioniert nach Art einer Rücklaufsperre. In Zuspanndrehrichtung der Betätigungseinheit 8 sowie des Untersetzungsgetriebes 17 bzw. in Zuspanndrehrichtung 50 der ersten Rampenhälfte 28 ist der Freilauf 44 stets freigängig und behindert nicht die Übertragung der Zuspannkraft auf die beiden nicht gezeigten Bremsbeläge. Ist der Bremssattel 1 hingegen im zugespannten Zustand, so wird die aus der Zuspannkraft resultierende Reaktionskraft über Bremskolben 5 und Nachstellvorrichtung 32 am Wälzkörperrampengetriebe 27 abgestützt. Infolge des hohen Wirkungsgrades ist dadurch die erste Rampenhälfte 28 geneigt sich in Richtung 'Lösen der Bremse' zu drehen. Dies wird jedoch durch den Freilauf 44 unterbunden. Jeweils mit Federkraft einer Druckfeder 45 beaufschlagte Klemmkörper 46, vorzugsweise Klemmrollen, rollen für diesen Fall entlang einer geneigten Führungsfläche 47 und verklemmen die erste Rampenhälfte 28 gegenüber dem Bremssattel 1 bzw. gegenüber der zwischengeschalteten Hülse 41. Dadurch wird das Wälzkörperrampengetriebe 27 festgesetzt und eine unerwünschte Entspannung des Bremssattels 1 verhindert. Dabei sind das Abtriebsrad 23 und die erste Rampenhälfte 28 über Bolzen 51 hinsichtlich ihrer Drehbewegung aneinander gekoppelt, wobei zwischen Abtriebsrad 23 und erster Rampenhälfte 28 eine Lose vorgesehen ist. Die Bolzen 51 sind an der ersten Rampenhälfte 28 befestigt und ragen in Richtung auf das Abtriebsrad 23 vor, wobei sie sich unter Bildung der genannten Lose, d. h. mit Spiel, in zugehörige Ausnehmungen 52 des Abtriebsrades 23 erstrecken. Durch diese Lose bzw. das Spiel wird somit aufgrund der Reaktionskraft der Bremsenzuspannkraft der Freilauf 44 gesperrt, so daß die Bremsenzuspannkraft erhalten bleibt. Dies gilt auch beim Abschalten des Elektromotors 8. Dadurch läßt sich die Feststellbremsfunktion realisieren.

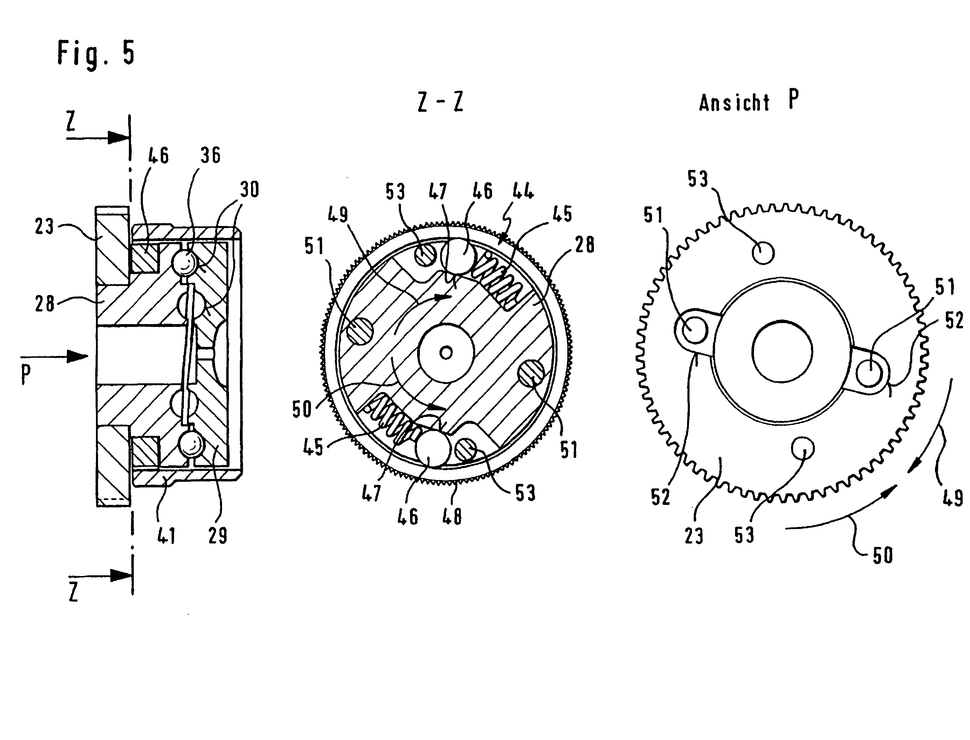

Zum Lösen des Bremssattels 1 nach einer elektromotorischen Betätigung wird die Betätigungseinheit 8 in Lösedrehrichtung betrieben. Über das Untersetzungsgetriebe 10 wird somit auch die erste Rampenhälfte 28 in Lösedrehrichtung 49 gedreht. Das Abtriebsrad 23 mit drehfest daran befestigten Schaltstiften 53 dreht sich geringfügig gegenüber der mit dem Bremssattel 1 verklemmten ersten Rampenhälfte 28 aufgrund der Lose zunächst ohne Drehmoment zu übertragen. Diese relative Verdrehung von Abtriebsrad 23 und Rampenhälfte 28 bewirkt ein Lösen der Klemmkörper 46, indem die sich in die erste Rampenhälfte 28 erstreckenden Schaltstifte 53 die Klemmkörper 46 aus ihrer Sperrposition verschieben und den Freilauf 44 freigeben. Die Position der Schaltstifte 53, der Bolzen 51, der Ausnehmungen 52 sowie der Klemmkörper 46 in ihrer Sperrposition ist dabei derart aufeinander abgestimmt, daß zum Lösen des gesperrten Freilaufes 44 zunächst die Schaltstifte 53 mit den Klemmkörpern 46 in Kontakt geraten und die Sperrfunktion auflösen bevor die Bolzen 51 mit den zugehörigen Ausnehmungen 52 in Anlage kommen, um Drehmoment zu übertragen. Die Schaltfunktion des Freilaufes 44 erlaubt somit durch Betrieb der Betätigungseinheit 8 in Lösedrehrichtung eine Entsperrung des Wälzkörperrampengetriebes 27 und dadurch eine Entspannung der Bremse. Wie den Figuren 4 und 5 zu entnehmen ist, ist die Anzahl der Schaltstifte 53, Bolzen 51, Klemmkörper 46 sowie Druckfedern 45 nicht auf eine bestimmte Anzahl aufgrund der Erfindung beschränkt. Die Figuren zeigen lediglich vorteilhaften Ausführungen.

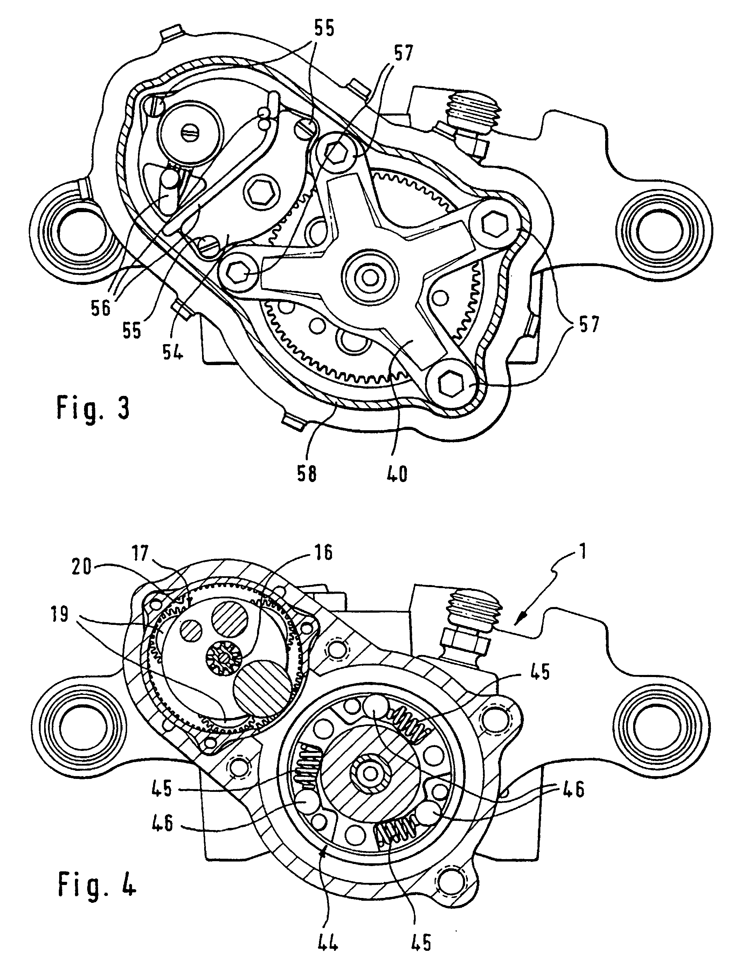

Die Anordnung der elektromechanischen Betätigungseinheit 8 parallel zur Bremskolbenachse 31 gestattet einerseits eine besonders kompakte Bauform für den Bremssattel 1 und andererseits die Möglichkeit der Modulbauweise eröffnet. Eine solche erste Unterbaugruppe umfaßt im wesentlichen die Betätigungseinheit 8, das Planetengetriebe 17, den Lagerschild 14 mit Hohlrad 20 den Winkellagesensor 26, das Antriebsrad 22 sowie einen Getriebedeckel 54. Mittels des Getriebedeckels 54 kann diese erste Unterbaugruppe außerhalb des Bremssattels 1 vormontiert werden und schließlich im Bremssattel 1 mit Befestigungsschrauben 55 befestigt werden. Der Getriebedeckel 54 dient weiterhin zur Lagerung der Sensorwelle 24 und des Antriebsrades 22 des Stirnradgetriebes 21. Außerdem verlaufen die elektrischen Leitungen 56 für die Betätigungseinheit 8 und den Winkellagesensor 26, wie in Figur 3 erkennbar, durch den Getriebedeckel 56 bzw. sie werden durch diesen geführt.

Darüber hinaus kann eine zweite Unterbaugruppe umfassend das Wälzkörperrampengetriebe 27, den schaltbaren Freilauf 44, das Abtriebsrad 23, die Hohlwelle 37 mit Lagerhülse 39 sowie das Lager 38 und die Traverse 40 gebildet werden. Dabei ist die Hohlwelle 37 über die Lagerhülse 39 und das Lager 38 an der Traverse 40 gelagert. Das Lager 38 sowohl als Axiallager als auch vorteilhaft als Schrägkugellager oder Schulterlager ausgebildet sein, um die radial wirksamen Lagereigenschaften zu verbessern. Diese zweite Unterbaugruppe kann ebenfalls als eigenständig handhabbares Modul außerhalb des Bremssattels 1 vormontiert werden. Nach dem Einsatz der zweiten Unterbaugruppe in die Ausnehmung 12' des Bremssattels wird die Unterbaugruppe über die Traverse 40 mittels Schrauben 57 am Bremssattel 1 befestigt. Dabei müssen die Traverse 40 und die Schrauben 57 stabil ausgelegt werden, da über sie die Reaktionskraft der Bremsenzuspannkraft abgestützt wird.

Verschlossen wird der Bremssattel 1 schließlich über einen Gehäusedeckel 58, der den Bremssattel 1 gegenüber der Umgebung abdichtet. Dazu weist der Gehäusedeckel 58 über seinen Umfang verteilt mehrere umgebogene Laschen 59 auf mit denen er einen zugehörigen Kragen 60 am Bremssattel 1 hintergreift. Zur Verbesserung der Dichtwirkung kann zwischen Gehäusedeckel 58 und Bremssattel 1 eine zusätzliche Dichtung 61 vorgesehen sein. Durch den Gehäusedeckel 58 wird auch die elektrische Zuleitung 62 für die Betätigungseinheit 8 und den Winkellagesensor 26 geführt.

Zur Umsetzung einer mechanischen Notbetätigung der Bremse z. B. bei Energieausfall ist im Gehäusedeckel 58 ein durch einen entfernbaren Stopfen 63 verschlossenes Loch angeordnet. Durch dieses Loch hindurch besteht Zugang zu einer Werkzeugaufnahme 64 am Antriebsrad 22 der Stirnradgetriebes 21. Bei Aufsetzen eines geeigneten Werkzeuges auf die Werkzeugaufnahme 64 kann das Untersetzungsgetriebe 10 zum Lösen bzw. Zuspannen der Bremse gedreht werden. Selbstverständlich ist es möglich die Werkzeugaufnahme an beliebiger geeigneter Stelle des Untersetzungsgetriebes 10 oder der Betätigungseinheit 8 anzuordnen.

Zwar ist für das in den Figuren gezeigte Ausführungsbeispiel eines erfindungsgemäßen Bremssattels sowohl eine hydraulische Betätigungsvorrichtung 7 als auch eine elektromechanische Betätigungseinheit 8 vorgesehen; dies ist jedoch nicht zwangsweise erforderlich. Bei ausreichender Dimensionierung der Betätigungseinheit 8 sowie des Untersetzungsgetriebes 10, d. h. falls ausreichend hohe Zuspannkräfte erzeugt werden können, so kann die zusätzliche hydraulische Betätigungsvorrichtung 7 entfallen. Durch den schaltbaren Freilauf 44 kann sowohl die Betriebs- als auch die Feststellbremsfunktion alleine mittels der elektromechanischen Betätigungseinheit realisiert werden.

## Patentansprüche

1. Elektromechanisch betätigbare Teilbelagscheibenbremse für Kraftfahrzeuge mit einem Bremssattel (1), mit einer elektromechanischen Betätigungseinheit (8), mit mindestens zwei jeweils mit einer Reibfläche einer Bremsscheibe zusammenwirkenden, im Bremssattel (1) verschiebbar angeordneten Bremsbelägen, von denen einer mittels zumindest eines Betätigungselementes (5, 32) durch die Betätigungseinheit (8) direkt und der andere Bremsbelag durch die Wirkung einer vom Bremssattel (1) aufgebrachten Reaktionskraft indirekt mit der Bremsscheibe in Eingriff bringbar ist, und mit einem wirkungsmäßig zwischen der Betätigungseinheit (8) und dem Betätigungselement (5, 32) angeordneten mehrstufigen Untersetzungsgetriebe (10), welches selbsthemmungsfrei ausgebildet ist, d.h. einen Gesamtwirkungsgrad η > 50% aufweist und einen schaltbaren Freilauf (44) sowie ein Wälzkörperrampengetriebe (27) umfasst, wobei die Betätigungseinheit (8), das Untersetzungsgetriebe (10) und das Betätigungselement (5, 32) in einer gehäuseartigen Ausnehmung (12, 12') des Bremssattels (1) angeordnet sind, **dadurch gekennzeichnet, daß** das Wälzkörperrampengetriebe (27) mehrere verschachtelt angeordnete Rampenanordnungen (30) aufweist.

2. Teilbelagscheibenbremse nach Anspruch 1, **dadurch gekennzeichnet, daß** das Wälzkörperrampengetriebe (27) zwei relativ zueinander verdrehbare Rampenhälften (28, 29) aufweist, von denen eine erste Rampenhälfte (28) an ein abtriebsseitiges Ende der elektromechanischen Betätigungseinheit (8) gekoppelt ist und eine zweite Rampenhälfte (23) mit dem Betätigungselement (5, 32) wirkungsverbunden ist.

3. Teilbelagscheibenbremse nach Anspruch 2, **dadurch gekennzeichnet, daß** die zweite Rampenhälfte (23) verdrehgesichert im Bremssattel (1) angeordnet ist.

4. Teilbelagscheibenbremse nach einem der vorhergehenden Ansprüche, **dadurch gekennzeichnet, daß** der schaltbare Freilauf (44) als eine entgegen der Zuspanndrehrichtung wirksame Rücklaufsperre ausgebildet ist.

5. Teilbelagscheibenbremse nach einem der vorhergehenden Ansprüche, **dadurch gekennzeichnet, daß** das Untersetzungsgetriebe (10) ein antriebsseitig mit der elektromechanischen Betätigungseinheit (8) gekoppeltes Planetengetriebe (17) umfaßt.

6. Teilbelagscheibenbremse nach Anspruch 5, **dadurch gekennzeichnet, daß** das Untersetzungsgetriebe (10) ein antriebsseitig mit dem Planetengetriebe (17) und abtriebsseitig mit dem Wälzkörperrampengetriebe (27) gekoppeltes Stirnradgetriebe (21) umfaßt.

7. Teilbelagscheibenbremse nach einem der vorhergehenden Ansprüche, **dadurch gekennzeichnet, daß** das Betätigungselement (5,32) einen verschiebbar im Bremssattel (1) angeordneten sowie mit mindestens einem Bremsbelag wirkungsverbundenen Bremskolben (5) aufweist, der an das Wälzkörperrampengetriebe (27) abtriebsseitig gekoppelt ist.

8. Teilbelagscheibenbremse nach einem der vorhergehenden Ansprüche, **dadurch gekennzeichnet, daß** das Betätigungselement (5, 32) eine verschiebbar im Bremssattel (1) angeordnete, in Zuspannrichtung der Teilbelagscheibenbremse verlängerbare Nachstellvorrichtung (32) aufweist, die einerseits mit mindestens einem Bremsbelag wirkungsverbundenen ist und andererseits an das Wälzkörperrampengetriebe (27) abtriebsseitig gekoppelt ist.

9. Teilbelagscheibenbremse nach den Ansprüchen 7 und 8, **dadurch gekennzeichnet, daß** die Nachstellvorrichtung (32) eine relativ zueinander verdrehbare Mutter-Spindel-Anordnung (33, 34) umfaßt, die einseitig mit dem Bremskolben (5) zusammenwirkt.

10. Teilbelagscheibenbremse nach den Ansprüchen 3 und 9, **dadurch gekennzeichnet, daß** die Spindel (33) der Mutter-Spindel-Anordnung (33, 34) verdrehsicher mit der zweiten Rampenhälfte (28) verbunden ist.

11. Teilbelagscheibenbremse nach Anspruch 7, **dadurch gekennzeichnet, daß** die Teilbelagscheibenbremse eine von der elektromechanischen Betätigungseinheit (8) unabhängige hydraulische Betätigungsvorrichtung (7) aufweist.

12. Teilbelagscheibenbremse nach einem der vorhergehenden Ansprüche, **dadurch gekennzeichnet, daß** die elektromechanische Betätigungseinheit (8) einen DC-Elektromotor umfaßt.

13. Teilbelagscheibenbremse nach Anspruch 12, **dadurch gekennzeichnet, daß** der Elektromotor (8) einen Winkellagesensor (26) aufweist, der an die Drehbewegung des Elektromotors (8) gekoppelt ist und in den Elektromotor (8) oder das Untersetzungsgetriebe (10) integriert ist.

14. Teilbelagscheibenbremse nach Anspruch 12, **dadurch gekennzeichnet, daß** der Winkellagesensor (26) als Hallsensor ausgeführt ist.

15. Teilbelagscheibenbremse nach einem der vorhergehenden Ansprüche, **dadurch gekennzeichnet, daß** das Untersetzungsgetriebe (10) eine Werkzeugaufnahme (64) zum Ansetzen eines Notbetätigungselementes aufweist.

16. Teilbelagscheibenbremse nach einem der vorhergehenden Ansprüche, **dadurch gekennzeichnet, daß** zumindest die elektromechanische Betätigungseinheit (8) sowie das Untersetzungsgetriebe (10) mittels eines am Bremssattel (1) befestigten Gehäusedeckels gegenüber der Umgebung abgedichtet sind.

17. Teilbelagscheibenbremse nach den Ansprüchen 5 und 6, **dadurch gekennzeichnet, daß** zumindest die elektromechanische Betätigungseinheit (8), das Planetengetriebe (17) sowie ein Antriebsrad (22) des Stirnradgetriebes (21) eine selbstständig handhabbare erste Unterbaugruppe bilden, die in der gehäuseartigen Ausnehmung (12) des Bremssattels (1) befestigt ist.

18. Teilbelagscheibenbremse nach den Ansprüchen 1 und 6, **dadurch gekennzeichnet, daß** zumindest die Wälzkörperrampenvorrichtung (27), der schaltbare Freilauf (44) sowie ein Abtriebsrad (23) des Stirnradgetriebes (21) als zweite selbstständig handhabbare Unterbaugruppe ausgebildet sind, die in der gehäuseartigen Ausnehmung (12') des Bremssattels (1) befestigt ist.

## Claims

1. An electromechanically actuated partially lined disk brake for motor vehicles with a brake caliper (1), an electromechanical actuating unit (8), at least two brake linings that are displaceably arranged in the brake caliper (1) and act on a friction surface of a brake disk respectively, wherein one brake lining can be brought into contact directly with the brake disk by at least one actuating element (5, 32) via the actuating unit (8) and the other brake lining can be brought into contact indirectly with the brake disk through the effect of a reaction force generated by the brake caliper (1), as well as a multi-step reduction gear (10) that, in terms of effect, is arranged between the actuating unit (8) and actuating element (5, 32), said reduction gear being without self-locking engagement, i.e. having an overall efficiency of η > 50%, and comprising an engageable freewheel (44) and a rolling-element ramp-type gear (27), with said actuating unit (8), reduction gear (10), and actuating element (5, 32) being located in a recess (12, 12') of the brake caliper (1) that is configured as a housing, **characterized in that** the rolling-element ramp-type gear (27) exhibits several emboxed ramp configurations (30).

2. A partially lined disk brake as claimed in claim 1,
**characterized in that** the rolling-element ramp-type gear (27) exhibits two ramp halves (28, 29) that can be twisted relative to one another, with a first ramp half (28) being connected to the electromechanical actuating unit (8) at the output end and a second ramp half (23) being operatively connected to the actuating element (5, 32).

3. A partially lined disk brake as claimed in claim 2,
**characterized in that** the second ramp half (23) is arranged in a twist-proof manner in the brake caliper (1).

4. A partially lined disk brake as claimed in any one of the preceding claims,
**characterized in that** the engageable freewheel (44) is designed as a return stop effective in the direction opposite to the direction of rotation of clamping.

5. A partially lined disk brake as claimed in any one of the preceding claims,
**characterized in that** the reduction gear (10) comprises a planetary gear (17) connected to the electromechanical actuating unit (8) at the driving end.

6. A partially lined disk brake as claimed in claim 5,
**characterized in that** the reduction gear (10) comprises a spur gear (21) connected to the planetary gear (17) at the driving end and to the rolling-element ramp-type gear (27) at the output end.

7. A partially lined disk brake as claimed in any one of the preceding claims,
**characterized in that** the actuating element (5, 32) exhibits a brake piston (5) arranged displaceably in the brake caliper (1) and connected operatively to at least one brake lining, with said brake piston (5) being connected to the rolling-element ramp-type gear (27) at the output end.

8. A partially lined disk brake as claimed in any one of the preceding claims,
**characterized in that** the actuating element (5, 32) exhibits an adjusting device (32) extendable in the clamping direction of the partially lined disk brake, which is arranged displaceably in the brake caliper (1), with said adjusting device (32) being operatively connected to at least one brake lining on the one hand and connected to the rolling-element ramp-type gear (27) at the output end on the other hand.

9. A partially lined disk brake as claimed in claims 7 and 8,
**characterized in that** the adjusting device (32) comprises a nut-and-spindle configuration (33, 34) that can be twisted relative to one another and acts on the brake piston (5) on one side.

10. A partially lined disk brake as claimed in claims 3 and 9,
**characterized in that** the spindle (33) of the nut-and-spindle configuration (33, 34) is connected to the second ramp half (28) in a twist-proof manner.

11. A partially lined disk brake as claimed in claim 7,
**characterized in that** the partially lined disk brake exhibits a hydraulic actuating device (7) that is independent of the electromechanical actuating unit (8).

12. A partially lined disk brake as claimed in any one of the preceding claims,
**characterized in that** the electromechanical actuating unit (8) comprises a DC electric motor.

13. A partially lined disk brake as claimed in claim 12,
**characterized in that** the electric motor (8) exhibits an angular position sensor (26) that is connected to the direction of rotation of the electric motor (8) and integrated in the electric motor (8) or reduction gear (10).

14. A partially lined disk brake as claimed in claim 12,
**characterized in that** the angular position sensor (26) preferably is designed as a Hall sensor.

15. A partially lined disk brake as claimed in any one of the preceding claims,
**characterized in that** the reduction gear (10) exhibits a tool holding fixture (64) for an emergency actuating element.

16. A partially lined disk brake as claimed in any one of the preceding claims,
**characterized in that** at least the electromechanical actuating unit (8) as well as the reduction gear (10) are sealed off against their surroundings by means of a housing cover attached to the brake caliper (1).

17. A partially lined disk brake as claimed in claims 5 and 6,
**characterized in that** at least the electromechanical actuating unit (8), planetary gear (17) as well as one drive wheel (22) of the spur gear (21) form a first independent subassembly that is located in a housing-like recess (12) of the brake caliper (1).

18. A partially lined disk brake as claimed in claims 1 and 6,
**characterized in that** at least the rolling-element ramp-type device (27), engageable freewheel (44) as well as one output wheel (23) of the spur gear (21) form a second independent subassembly that is located in a housing-like recess (12') of the brake caliper (1).

## Revendications

1. Frein à disque à garniture partielle à actionnement électromécanique pour véhicule automobile comportant un étrier de frein (1), une unité d'actionnement (8) électromécanique, au moins deux garnitures de frein disposées coulissantes dans l'étrier de frein (1) et coopérant avec une surface de friction d'un disque de frein, dont une peut être amenée directement en engagement avec le disque de frein au moyen d'au moins un élément d'actionnement (5, 32) par l'unité d'actionnement (8) et l'autre garniture de frein peut être amenée indirectement en engagement avec le disque de frein par l'action d'une force de réaction appliquée par l'étrier de frein (1), et comportant un démultiplicateur (10) à plusieurs étages disposé de manière fonctionnelle entre l'unité d'actionnement (8) et l'élément d'actionnement (5, 32), lequel est réalisé sans autoblocage c'est-à-dire qu'il présente un rendement total η > 50 % et comporte une roue libre (44) commandable ainsi qu'un mécanisme à rampe pour corps de roulement (27), l'unité d'actionnement (8), le démultiplicateur (10) et l'élément d'actionnement (5, 32) étant disposés dans un évidement (12, 12') de type boîtier de l'étrier de frein (1), **caractérisé en ce que** le mécanisme à rampe pour corps de roulement (27) comporte plusieurs agencements de rampes (30) disposés emboîtés.

2. Frein à disque à garniture partielle selon la revendication 1, **caractérisé en ce que** le mécanisme à rampe pour corps de roulement (27) comporte deux moitiés de rampe (28, 29) pouvant tourner l'une par rapport à l'autre, dont une première moitié de rampe (28) est couplée à une extrémité côté sortie de l'unité d'actionnement (8) électromécanique et une deuxième moitié de rampe (23) est reliée de manière fonctionnelle à l'élément d'actionnement (5, 32).

3. Frein à disque à garniture partielle selon la revendication 2, **caractérisé en ce que** la deuxième moitié de rampe (23) est disposée de manière bloquée en rotation dans l'étrier de frein (1).

4. Frein à disque à garniture partielle selon l'une des revendications précédentes, **caractérisé en ce que** la roue libre (44) commandable est réalisée sous la forme d'un blocage du retour agissant dans le sens contraire au sens de rotation du serrage.

5. Frein à disque à garniture partielle selon l'une des revendications précédentes, **caractérisé en ce que** le démultiplicateur (10) comprend un engrenage planétaire (17) couplé côté entraînement à l'unité d'actionnement (8) électromécanique.

6. Frein à disque à garniture partielle selon la revendication 5, **caractérisé en ce que** le démultiplicateur (10) comprend un engrenage à roues droites (21) couplé côté entraînement à l'engrenage planétaire (17) et côté sortie au mécanisme à rampe pour corps de roulement (27).

7. Frein à disque à garniture partielle selon l'une des revendications précédentes, **caractérisé en ce que** l'élément d'actionnement (5, 32) comporte un piston de frein (5) disposé coulissant dans l'étrier de frein (1) et relié de manière fonctionnelle à au moins une garniture de frein, lequel est couplé côté sortie au mécanisme à rampe pour corps de roulement (27).

8. Frein à disque à garniture partielle selon l'une des revendications précédentes, **caractérisé en ce que** l'élément d'actionnement (5, 32) comporte un dispositif de rattrapage de jeu (32) disposé coulissant dans l'étrier de frein (1) et pouvant être prolongé dans le sens du serrage du frein à disque à garniture partielle, dispositif qui d'une part est relié de manière fonctionnelle à au moins une garniture de frein et d'autre part est couplé côté sortie au mécanisme à rampe pour corps de roulement (27).

9. Frein à disque à garniture partielle selon les revendications 7 et 8, **caractérisé en ce que** le dispositif de rattrapage de jeu (32) comprend un agencement à écrou et broche (33, 34) pouvant tourner l'un par rapport à l'autre qui coopère d'un côté avec le piston de frein (5).

10. Frein à disque à garniture partielle selon les revendications 3 et 9, **caractérisé en ce que** la broche (33) de l'agencement à écrou et broche (33, 34) est reliée de manière bloquée en rotation à la deuxième moitié de rampe (28).

11. Frein à disque à garniture partielle selon la revendication 7, **caractérisé en ce que** le frein à disque à garniture partielle comporte un dispositif d'actionnement (7) hydraulique indépendant de l'unité d'actionnement (8) électromécanique.

12. Frein à disque à garniture partielle selon l'une des revendications précédentes, **caractérisé en ce que** l'unité d'actionnement (8) électromécanique comprend un moteur à courant continu.

13. Frein à disque à garniture partielle selon la revendication 12, **caractérisé en ce que** le moteur électrique (8) comporte un capteur de position angulaire (26) qui est couplé au mouvement de rotation du moteur électrique (8) et est intégré au moteur électrique (8) ou au démultiplicateur (10).

14. Frein à disque à garniture partielle selon la revendication 12, **caractérisé en ce que** le capteur de position angulaire (26) est réalisé en tant que capteur de Hall.

15. Frein à disque à garniture partielle selon rune des revendications précédentes, **caractérisé en ce que** le démultiplicateur (10) comporte une prise d'outil (64) pour y placer un élément d'actionnement d'urgence.

16. Frein à disque à garniture partielle selon l'une des revendications précédentes, **caractérisé en ce qu'**au moins l'unité d'actionnement (8) électromécanique ainsi que le démultiplicateur (10) sont rendus étanches par rapport au milieu ambiant au moyen d'un couvercle de boîtier fixé à l'étrier de frein (1).

17. Frein à disque à garniture partielle selon les revendications 5 et 6, **caractérisé en ce qu'**au moins une unité d'actionnement (8) électromécanique, l'engrenage planétaire (17) ainsi qu'une roue d'entraînement (22) de l'engrenage à roues droites (21) forment un premier sous-ensemble pouvant être manipulé de manière autonome, qui est fixé dans l'évidement (12) de type boîtier de l'étrier de frein (1).

18. Frein à disque à garniture partielle selon les revendications 1 et 6, **caractérisé en ce qu'**au moins le dispositif à rampe pour corps de roulement (27), la roue libre (44) commandable ainsi qu'une roue menée (23) de l'engrenage à roues droites (21) sont réalisés sous la forme d'un sous-ensemble pouvant être manipulé de manière autonome qui est fixé dans l'évidement (12') de type boîtier de l'étrier de frein (1).
